Europäisches Patentamt

**European Patent Office**

**Office européen des brevets**

(19)

(11) Veröffentlichungsnummer: **0 135 610**
A1

(12) **EUROPÄISCHE PATENTANMELDUNG**

(21) Anmeldenummer: **83109739.9**

(22) Anmeldetag: **29.09.83**

(51) Int. Cl.⁴: **G 01 C 15/00, E 01 B 35/10, E 21 D 9/00**

(43) Veröffentlichungstag der Anmeldung: **03.04.85** Patentblatt **85/14**

(71) Anmelder: **ALPHA TECHNOLOGIES LTD., 7033 Antrim Avenue, Burnaby, B.C. V5J 4M5 (CA)**

(72) Erfinder: **Zeilinger, W., Dipl.-Ing., Christian-Wildner-Strasse 34, D-8500 Nürnberg (DE)**

(84) Benannte Vertragsstaaten: **AT BE CH DE FR GB IT LI LU NL SE**

(74) Vertreter: **Göbel, Matthias, Dipl.-Ing., Pruppacher Hauptstrasse 5-7, D-8501 Pyrbaum-Pruppach (DE)**

(54) **Verfahren zum Vermessen und Bestimmen von Raumpunkten.**

(57) Bei einem Verfahren zum Vermessen und Bestimmen von Raumpunkten, insbesondere in Rohren, Stollen und Tunnel, wird zum kurzfristig reproduzierten Vermessen in Rohrzügen mit beliebigen Durchmessergrößen ein Empfänger mit einem vor und einem hinter diesem mit gleicher konstanter Basislänge angeordneten Sender gemeinsam gleichzeitig entlang der Rohre, Stollen und Tunnel um Basislängenintervalle längsbewegt und positioniert, in den Intervallpositionen der Empfänger auf die Sender ausgerichtet und mittels der ermittelten Differenzwinkel zwischen dem Empfänger und den beiden Sendern eine Raumkurve nach Höhe und/oder Seite bestimmt.

DIPL.-ING. **M. GÖBEL**
PATENTANWALT

8501 PYRBAUM-PRUPPACH
PRUPPACHER HAUPTSTRASSE 55
TELEFON 09180 / 675
TELEGRAMM GOEPATENT PYRBAUM
TELEX 624407 GOEPA

BANKKONTEN:
VOLKSBANK NÜRNBERG 45 233 BLZ 76090000
COMMERZBANK NÜRNBERG 8 300 907 BLZ 760 400 61

ALPHA TECHNOLOGIES LTD. Burnaby, Kanada

Verfahren zum Vermessen und Bestimmen von Raumpunkten

Die Erfindung betrifft ein Verfahren zum Vermessen und Bestimmen von Raumpunkten, insbesondere in Rohren, Stollen und Tunnel.

Es ist bekannt, den Verlauf von Tunnel und Stollen vermittels eines aufzuzeichnenden Polygonzuges zu bestimmen bzw. zu vermessen. Hierzu sind mittels eines optischen Gerätes, z.B. eines Theodoliten, Winkel zwischen Zielmarkierungen zu ermitteln und die Winkelunterschiede in Verbindung mit den jeweiligen Abständen für den Polygonzug von Bedeutung. Von Nachteil erweist sich bei den bekannten optischen Messungsverfahren die Notwendigkeit der manuellen Handhabung der Zieltafeln und Nachregelungen des optischen Gerätes durch Vermessungspersonen. Außerdem ist die Vermessung von Tunnel und Stollen mit kleinen Durchmessergrößen aus Platzgründen schwierig und umständlich bzw. die Vermessung enger Rohre überhaupt nicht durchführbar.

Es ist Aufgabe der Erfindung Maßnahmen zum kurzfristig reproduzierbaren Vermessen von Raumkurven in Rohrzügen mit beliebigen Durchmessergrößen zu schaffen.

Erfindungsgemäß ist diese Aufgabe dadurch gelöst, daß ein Empfänger mit einem vor und einem hinter diesem mit gleicher konstanter Basislänge angeordneten Sender gemeinsam gleichzeitig entlang der Rohre, Stollen und Tunnel um Basislängenintervalle längsbewegt und positioniert werden und in den Intervallpositionen der Empfänger auf die Sender ausgerichtet und mittels der ermittelten Differenzwinkel zwischen dem Empfänger und den beiden Sendern eine Raumkurve nach Höhe und/oder Seite bestimmt wird. Die Ausrichtung des Empfängers kann dabei beliebig, z.B. manuell oder bevorzugt vermittels eines motorischen Antriebs selbstsuchend erfolgen, wobei die Differenzwinkel über Winkelmesser, Drehwinkelgeber oder anderweitig geeigneter Weise ermittelt werden. Die Verfahrensschritte erlauben durch schrittweises Abfahren der Intervallpositionen durch die Sender und den Empfänger exakte Winkelmessungen bei denen die Fehler der bekannten optischen Auswertungen entfallen. Darüber hinaus werden die Vermessungshandlungen nicht durch Bedienungspersonal gestört und die Meßwerte können an eine Datenverarbeitungsanlage übertragen und an einem Speicher abgegeben werden. Die vorgegebenen konstanten Basislängen zwischen dem Empfänger und den Sendern geben dabei die Voraussetzung zu einem besonders einfachen Bestimmen der Raumpunkte, wobei die einzelnen Intervallpositionen einfach über die Winkel zu rechnen sind.

Es versteht sich, daß das Längsbewegen des Empfängers und der Sender an beliebiger Stelle in den Rohrzügen, bevorzugt in der senkrechten Mittellängsebene derselben erfolgen kann.

- 3 - 0135610

Nach weiterem Verfahren ist die Verwendung eines optischen Empfängers und lichterzeugenden Sendern, insbesondere mit punktförmigen Lichtquellen vorgesehen. Die Auswertung der Senderbilder kann gleichermaßen vermittels eines Bildsensors mit Optik und elektronischer Auswertung, durch eine allseitig drehbewegliche Kamera mit Empfangsstreifen oder eine allseitig drehbare Kamera mit einem Drehwinkelgeber für Höhen- und Seitenwinkel bzw. eines Positionssensors als Empfänger erfolgen. Schließlich sieht das Verfahren noch vor, daß zum Erkennen und Bestimmen von Verdrehungen des Rohrstrangs der Empfänger auf Sender mit mindestens zwei Lichtquellen ausgerichtet werden kann.

Bei einer Vorrichtung zur Durchführung des Verfahrens ist vorgesehen, den Empfänger und die beiden Sender auf durch starre oder flexible Mittel mit konstantem Basislängenabstand verbundenen unabhängigen Fahrgestellen anzuordnen und mittels der Fahrgestelle entweder auf Schienen, an Tragseilen oder der Rohrinnenwand gemeinsam gleichzeitig um Basislängenintervalle zu verfahren und in den Intervallpositionen zu fixieren. Bei der so gebildeten Vorrichtung benötigt vorteilhaft nur ein Fahrgestell einen Antrieb. Bei einer Abgewandelten Vorrichtung sind der Empfänger und die Sender auf unabhängigen Fahrgestellen angeordnet, die mittels eigener Antriebsmotore um Basislängenintervalle gleichzeitig oder nacheinander auf Schienen, an Tragseilen oder auf der Rohrinnenwand verfahrbar und in den Intervallpositionen fixierbar sind.Die Kennzeichnung der Intervallpositionen erfolgt zweckmäßig mittels in den Intervallpositionen an den Schienen ausgebildeten Markierungen, die zu einem selbständigen Anhalten

0135610

der Fahrgestelle Anlaß geben. Außerdem besteht die Möglichkeit, die Intervallpositionen mittels der Fahrwerkantriebe selbst bestimmbar zu machen. Eine weitere Bestimmung der Intervallpositionen ist durch Entfernungsmesser zu erreichen.

Eine exakte und schnelle Ausrichtung des Empfängers ist durch die Verwendung von Sendern mit moduliertem bzw. monochramatischem Licht zu erreichen. Auch Sender mit Infrarotlicht oder stark gebündeltem Licht, insbesondere Laserlicht sind vorgesehen.

Anstelle der Anordnung von punktförmigen Lichtquellen auf die der Empfänger auszurichten ist, ist auch denkbar, ringförmige Lichtquellen mit einem lichtfreien Mittelabschnitte in Anwendung zu bringen, der die Ausrichtfläche für den Empfänger bildet.

Letztlich besteht die Möglichkeit, den vorderen Sender unmittelbar mit einer Vortriebsmaschine oder einem Vortriebsschild in Verbindung zu bringen und bei Vortrieben um Basislängenabständen die Ausrichtung des Empfängers auf beide Sender zur Differenzwinkelbestimmung vorzunehmen.

Auch ist denkbar einem fest ausgebildeten Empfänger ein optisches Prisma verdrehbar zuzuordnen und vermittels diesem zur Ermittlung von Differenzwinkeln oder auswertbarem Streckenabschnitten der Senderbilder zur Prismenkante, diese auf die beiden Sender auszurichten und die Raumkurve nach Höhe und/oder Seite zu bestimmen.

Das Verfahren ist anhand der Zeichnung erläutert.

- 5 -                    0135610

Hierin bedeuten:

Figur 1    eine Vorrichtung zur Durchführung des Verfahrens in Draufsicht,

Figur 2    eine Vorrichtung zur Durchführung des Verfahrens in Seitenansicht,

Figuren
3 bis 5    verschiedene Verfahrensschritte in grafischer
           Darstellung,

Figur 6    eine Vorrichtung gemäß anderer Ausbildung
           schematisch und

Figur 7    eine abgewandelte Vorrichtung.

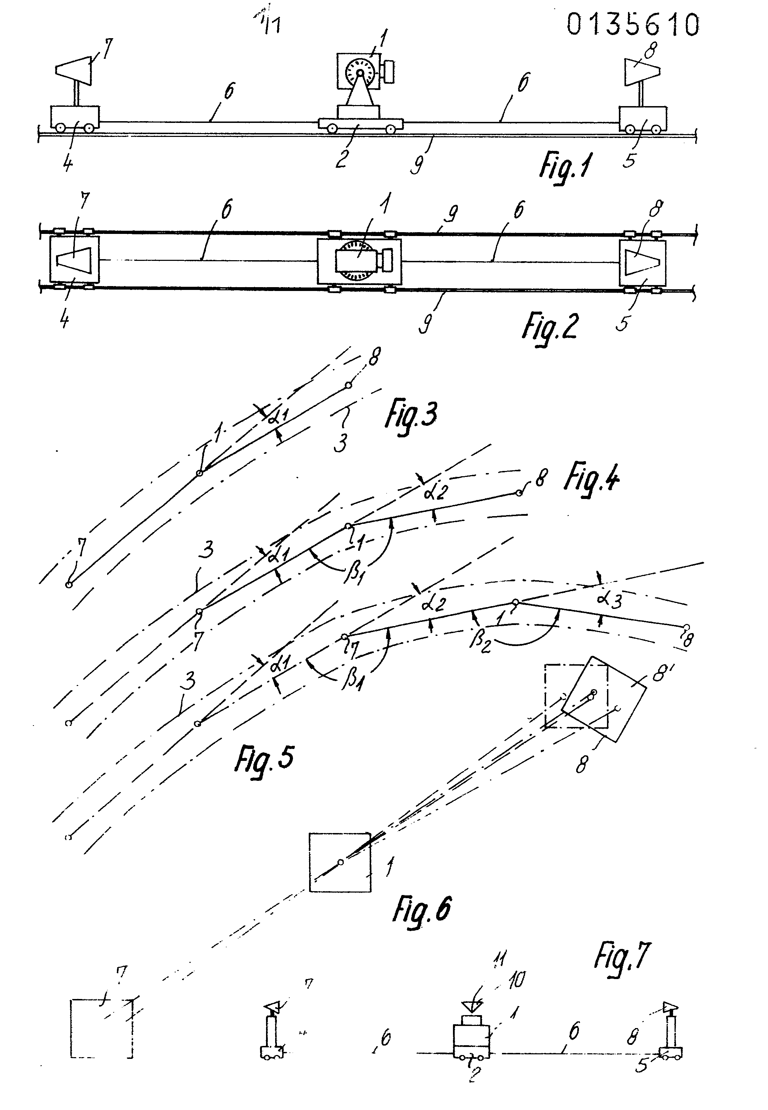

In den Figuren ist mit 1 ein Empfänger bezeichnet, der bevorzugt durch eine allseitig drehbewegliche Kamera mit zugeordneten Drehwinkelgebern für Seiten- und Höhenwinkel gebildet ist. Der Empfänger 1 ist auf einem Fahrgestell 2 aufgebracht, das in dem zu vermessenden Rohrstrang 3 auf Schienen 9 längsbewegbar ist. Mit 4 und 5 sind weitere Fahrgestelle bezeichnet, die über Stangen oder Seile 6 mit gleichen Basislängen mit dem Fahrgestell 2 konstant fest verbunden sind. Die Fahrgestelle 4 und 5 tragen Sender 7 und 8 mit einer Lichtquelle, auf die der Empfänger zur Durchführung der Verfahrensschritte ausrichtbar ist. Der Empfänger 1 und die Sender 7, 8 sind im Rohrstrang 3 um Basislängenintervalle längsbewegbar und in den Intervallpositionen fixierbar. In der Fig. 3 nehmen der Empfänger 1 und die Sender 7, 8 die Anfangsstellung ein. Durch Ausrichten des Empfängers 1 auf den Sender 8 ist der Winkel $\alpha_1$ bestimmbar.

In Fig. 4 ist die Vorrichtung um ein Basislängenintervall vorbewegt. Hierbei nimmt der Empfänger 1 die bisherige Stellung des Senders 8 ein, während der Sender 7 in die bisherige Stellung des Empfängers 1 vorbewegt ist. Der Sender 8 ist um eine Basislänge weiter in den Rohrstrang vorbewegt. Durch erneutes Ausrichten des Empfängers 1 auf den Sender 8 läßt sich der Winkel $\alpha$ 2 bestimmen und der Differenzwinkel $\beta$ 1 zum Bestimmen der Raumkurve ermitteln. Bei weiterem Vorbewegen der Fahrgestelle 2, 4, 5 um ein Basislängenintervall werden der Empfänger 1 in die Stellung des Senders 8 gebracht und die beiden Sender 7, 8 entsprechend weit vorbewegt. Durch Ausrichten des Empfängers 1 auf den Sender 8 ist der Winkel $\alpha$ 3 und damit der Differenzwinkel $\beta$ 2 zu ermitteln. Weitere Differenzwinkel sind durch entsprechende Betätigung von Empfänger und Sender zu erreichen.

In der Fig. 6 ist abweichend ein Sender 8' mit zwei Lichtquellen ausgerüstet, die bei Ausrichtung des Empfängers 1 ein Maß für die Verdrehung des Rohrstranges 3 zur Höhe und Seite geben.

Bei der Vorrichtung der Figur 7 ist einem unverdrehbar und zusammen mit Sendern 7 und 8 um Basislängenintervalle im Rohrstrang längsbeweg- und positionierbaren optischem Empfänger 1, z.B. eine Kamera, ein optisches Prisma 10, verdrehbar zugeordnet und durch Ausrichten des Prismas 10 auf die beiden Sender 7, 8 sind Differenzwinkel oder Streckenabschnitte der Senderbilder zur Prismenkante 11 als Maßangabe für die Bestimmung der Raumkurve zu ermitteln.

0135610

Patentansprüche:

1. Verfahren zum Vermessen und Bestimmen von Raumpunkten, insbesondere in Rohren, Stollen und Tunnel, dadurch gekennzeichnet, daß ein Empfänger mit einem vor und einem hinter diesem mit gleicher konstanter Basislänge angeordneten Sender gemeinsam gleichzeitig entlang der Rohre, Stollen und Tunnel um Basislängenintervalle längsbewegt und positioniert werden und daß in den Intervallpositionen der Empfänger auf die Sender ausgerichtet und mittels der ermittelten Differenzwinkel zwischen dem Empfänger und den beiden Sendern eine Raumkurve nach Höhe und/oder Seite bestimmt wird.

2. Verfahren nach Anspruch 1, dadurch gekennzeichnet, daß der Empfänger manuell oder vermittels eines motorischen Antriebs selbstsuchend auf die Sender ausgerichtet und die Differenzwinkel über Winkelmesser oder Drehwinkelgeber ermittelt werden.

3. Verfahren nach Anspruch 1, dadurch gekennzeichnet, daß der Empfänger und die Sender in der senkrechten Mittellängsebene der Rohre, Stollen und Tunnel längsbewegt werden.

4. Verfahren nach Anspruch 1, dadurch gekennzeichnet, daß ein optischer Empfänger und lichterzeugende Sender verwendet werden.

5. Verfahren nach Anspruch 1, 3 und 4, dadurch gekennzeichnet, daß der Empfänger zum Erkennen und Bestimmen von Verdrehungen des Rohrstrangs auf Sender mit mindestens zwei Lichtquellen ausgerichtet wird.

0135610

- 8 -

6. Verfahren nach Anspruch 1 und 4, dadurch gekennzeichnet, daß ein Bildsensor mit Optik und elektronischer Auswertung der Senderbilder verwendet wird.

7. Verfahren nach Anspruch 1 und 4, dadurch gekennzeichnet, daß die Senderbilder durch eine allseitig drehbewegliche Kamera mit Empfangsstreifen ausgewertet werden.

8. Verfahren nach Anspruch 1, 3 und 4, dadurch gekennzeichnet, daß die Senderbilder vermittels einer als Empfänger dienenden allseitig verdrehbaren Kamera mit Drehwinkelgeber für Höhen- und Seitenwinkel ausgewertet werden.

9. Verfahren nach Anspruch 1, gekennzeichnet durch die Verwendung eines Positionssensors als Empfänger der Senderbilder.

10. Vorrichtung zur Durchführung des Verfahrens nach Anspruch 1, dadurch gekennzeichnet, daß der Empfänger (1) und die beiden Sender (7, 8) auf durch starre oder flexible Mittel (6) mit konstantem Basislängenabstand verbundenen unabhängigen Fahrgestellen (2, 4,5) angeordnet sind und mittels der Fahrgestelle (2, 4, 5) auf Schienen (9), an Tragseilen oder auf der Rohrinnenwand gemeinsam gleichzeitig um Basislängenintervalle im Rohrstrang längsbewegbar und in den Intervallpositionen fixierbar sind.

11. Vorrichtung zur Durchführung des Verfahrens nach Anspruch 1, dadurch gekennzeichnet, daß der Empfänger (1) und die beiden Sender (7, 8) auf unabhängigen Fahrgestellen (2, 4, 5) angeordnet sind, die mittels eigenen Antriebsmotoren um Basislängenintervalle auf Schienen (9), an Tragseilen oder auf der Rohrinnenwand im Rohrstrang längsb-ewegbar und in den Intervallpositionen fixierbar sind.

12. Vorrichtung nach Anspruch 1, 10 und 11, dadurch gekennzeichnet, daß die Schienen (9),Tragseile oder die Rohrinnenwand Markierungen zur Bestimmung der Intervallpositionen aufweisen.

13. Vorrichtung nach Anspruch 1, 10 und 11, dadurch gekennzeichnet, daß die Intervallpositionen mittels der Fahrwerksantriebe bestimmbar sind.

14. Vorrichtung nach Anspruch 1, 10 und 11, dadurch gekennzeichnet, daß die Intervallpositionen durch Entfernungsmesser bestimmbar sind.

15. Vorrichtung nach Anspruch 1, 4 und 5, gekennzeichnet durch die Anordnung von moduliertes Licht abgebenden Sendern (7, 8).

16. Vorrichtung nach Anspruch 1, 4 und 5, gekennzeichnet durch die Anordnung von monochramatisches Licht abgebenden Sendern (7, 8).

17. Vorrichtung nach Anspruch 1, 4 und 5, gekennzeichnet durch die Anordnung von Infrarotlicht erzeugenden Sendern.

18. Vorrichtung nach Anspruch 1, 4 und 5, dadurch gekennzeichnet, daß die Sender (7, 8) stark gebündeltes Licht erzeugen (Laserlicht).

0135610

19. Vorrichtung nach Anspruch 1, 4 und 5, gekennzeichnet durch die Anordnung von ringförmigen Lichtquellen mit einem lichtfreien Mittelab-schnitt, der die Ausrichtfläche für den Empfänger (1) bildet.

20. Verfahren nach Anspruch 1, dadurch gekennzeichnet, daß ein fest ausgebildeter optischer Empfänger (1) vermittels eines zugeordneten, verdrehbaren optischen Prismas (10) in den Intervallpositionen auf die beiden Sender (7, 8) ausgerichtet und die ermittelten Differenzwinkel oder die Lage der Senderbilder zur Prismenkante (11) die Raumkurve nach Höhe und/oder Seite bestimmt wird.

0135610

Fig.1

Fig.2

Fig.3

Fig.4

Fig.5

Fig.6

Fig.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | CH-A- 510 171 (MATISSA) <br><br> * Insgesamt * <br><br>--- | 1,4-6, 9,15-18 | G 01 C 15/00 <br> E 01 B 35/10 <br> E 21 D 9/00 |
| A | DE-A-3 120 010 (ZÜBLIN) <br><br> * Seiten 10-12 * <br><br>--- | 1,4-6, 10,17 | |
| A | US-A-3 750 299 (F. PLASSER et al.) <br> * Spalte 3, Zeile 22 - Spalte 4, Zeile 35 * | 1,10, 11 | |
| A | * Spalte 6, Zeilen 33-40 * <br><br>--- | 12 | |
| A | US-A-4 173 073 (FUKAZAWA et al.) <br> * Insgesamt * <br><br>----- | 1,10 | |

| RECHERCHIERTE SACHGEBIETE (Int. Cl. 3) |
|---|
| G 01 C <br> G 01 B <br> E 01 B <br> E 21 D |

Der vorliegende Recherchenbericht wurde für alle Patentansprüche erstellt.

| Recherchenort <br> DEN HAAG | Abschlußdatum der Recherche <br> 08-06-1984 | Prüfer <br> DE BUYZER H.J. |
|---|---|---|